# EUROPÄISCHE PATENTSCHRIFT

(11) **EP 0 425 818 B1**
(45) Veröffentlichungstag und Bekanntmachung des Hinweises auf die Patenterteilung: **14.04.1993**
(21) Anmeldenummer: 90118635.3
(22) Anmeldetag: 28.09.1990
(51) Int. Cl.: F16H 7/02, F16H 55/49

(54) **Keilriementrieb**
"V"-belt drive
Transmission à courroie en "V"

(30) Priorität: 02.10.1989 DE 3932859
(43) Veröffentlichungstag der Anmeldung: 08.05.1991
(73) Patentinhaber: Continental Aktiengesellschaft, 30165 Hannover (DE)
(72) Erfinder: Moses, Reinhold, Dipl.-Ing., D-3456 Eimen 1 (DE)

(56) Entgegenhaltungen:
- DE-A- 3 430 100
- US-A- 2 060 322
- US-A- 4 525 158

## Beschreibung

Die Erfindung betrifft einen Keilriementrieb entsprechend den im Oberbegriff von Anspruch 1 aufgeführten Merkmalen.

Bei derartigen Keilrippenriementrieben treten in den Rippen des Keilriemens beim Umlenken um die Riemenscheiben Verformungen auf, die - wie der DE-A-34 30 100 zu entnehmen ist - abhängig von dem Abstand der neutralen Faser von der Achse der Keilriemenscheibe ist.

Aufgabe der vorliegenden Erfindung ist es, einen Keilriementrieb der eingangs beschriebenen Art zu schaffen, bei dem die Profilrillen jeder Riemenscheibe optimal auf den jeweiligen Querschnitt der Profilrippen des Keilrippenriemens abgestimmt sind.

Gelöst wird diese Aufgabe durch die im Anspruch 1 aufgeführten Merkmale.

Es hat sich gezeigt, daß die Profilrillen bei der Umlenkung um eine Riemenscheibe verformt werden, so daß ihre zuvor gleichen Profilwinkel durch diese Verformung unterschiedliche Größen annehmen. Bei der Umlenkung eines Keilrippenriemens um eine Riemenscheibe erfährt der radial außerhalb der neutralen Faser liegende Keilriemenrücken eine Streckung, während die radial innerhalb der neutralen Faser liegenden Profilrippen gestaucht werden. Dabei kommt es zwischen den axial innen liegenden Profilflanken bezüglich der durch die Stauchung entstehenden Querkräfte, die im übrigen zu einer Verkleinerung der Profilwinkel führen, zu einer Stützwirkung. Dagegen fehlt diese Stützwirkung jeweils auf der axial äußeren Seite der beiden axial außen liegenden Profilrippen, so daß sich die neutrale Faser dort tendenziell nach radial außen aufwölbt. Hierdurch erfahren die beiden axial außen liegenden Profilwinkel des Keilrippenriemens eine Aufweitung, sie werden also größer als die axial innen liegenden Profilwinkel. Diesem Phänomen wird durch die erfindungsgemäße Lösung Rechnung getragen, indem die Rillenwinkel der beiden axial außen liegenden Scheibenrilen in Abhängigkeit von dem Scheibendurchmesser vergrößert werden. Damit wird ein Riementrieb geschaffen, bei dem die Profilrillen der Keilriemenscheibe unterschiedlich und damit optimal den auf ihr ablaufenden Profilrippen des Keilrippenriemens angepaßt sind.

Weitere vorteilhafte Maßnahmen sind in den Unteransprüchen angegeben. Die Erfindung ist in der beiliegenden Zeichnung anhand eines Ausführungsbeispiels dargestellt und wird nachfolgend näher beschrieben; es zeigt:
- Fig. 1: den Schnitt durch einen schematisch dargestellten Keilrippenriemen;
- Fig. 2: den Schnitt durch die schematische perspektivische Darstellung eines Keilrippenriemens nach der Fig. 1 bei der Umlenkung um eine Riemenscheibe, wobei die Riemenscheibe selbst nicht eingezeichnet ist;
- Fig. 3: den Schnitt durch eine schematisch dargestellte Riemenscheibe zur Aufnahme eines Keilrippenriemens nach der Fig. 1;
- Fig. 4: die Darstellung des äußeren Rillenabstandes (26a in Fig. 3) einer Riemenscheibe als Funktion ihres Durchmessers;
- Fig. 5: die Darstellung der äußeren und inneren Rillenwinkel der Scheibenrillen einer Riemenscheibe als Funktion des Scheiben-Durchmessers.

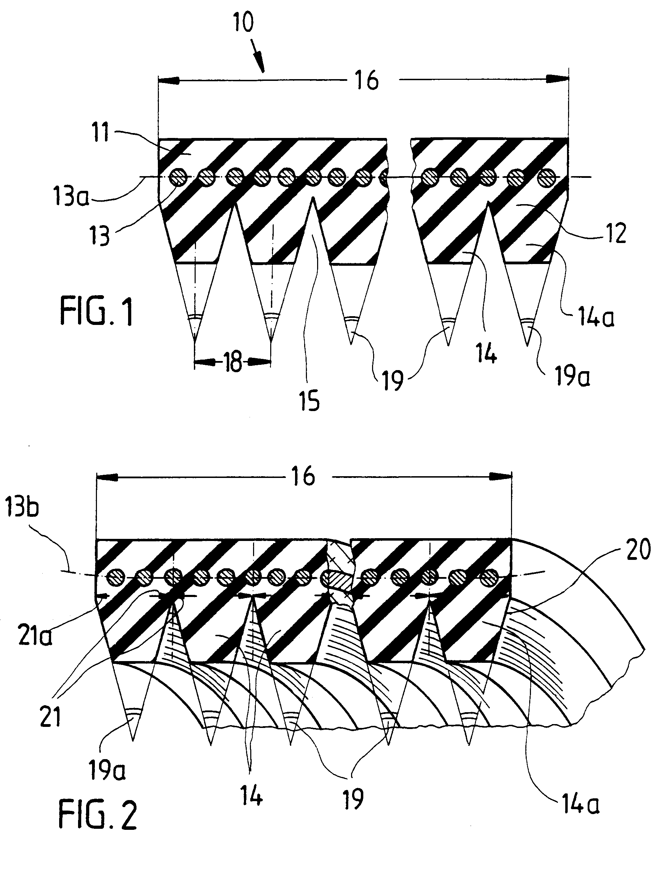

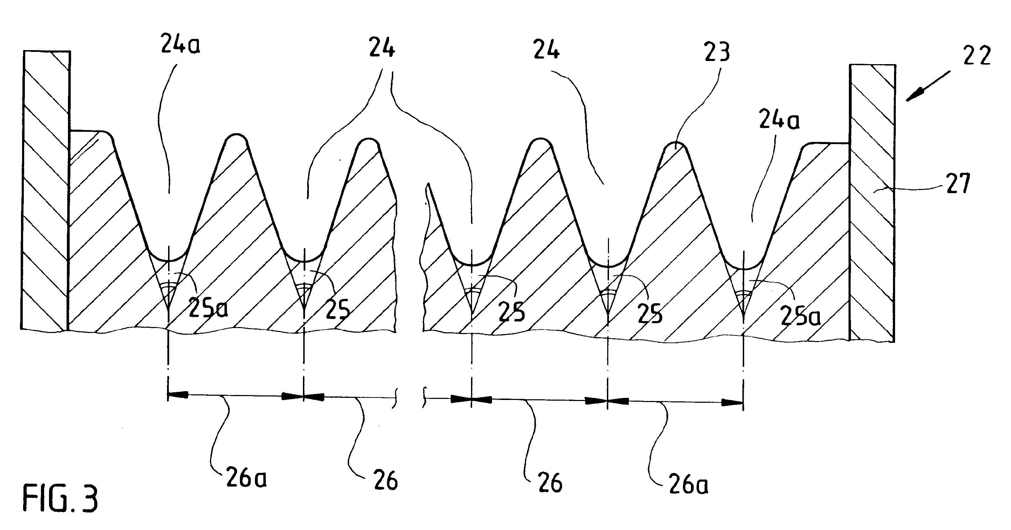

Ein Keilriementrieb besteht aus einem Keilrippenriemen 10, wie er beispielsweise in Fig. 1 dargestellt ist, und aus mindestens zwei Keilrippenriemenscheiben 22, von denen eine schematisch in Fig. 3 dargestellt ist. Derartige Keilriementriebe werden vielfach im Kraftfahrzeugbau eingesetzt, wo es gilt, eine Vielzahl von Aggregaten, wie die Lichtmaschine, die Wasserpumpe, eine Lenkhilfe usw., durch eine auf die Kurbelwelle aufgesetzte Riemenscheibe anzutreiben. Die für diese Aggregate erforderlichen Drehzahlen sind unterschiedlich, so daß bei gleicher Riemengeschwindigkeit Keilrippenriemenscheiben unterschiedlicher Durchmesser zur Anwendung gebracht werden müssen. Ebenso erfolgt der Einsatz in Haushaltsmaschinen, wie Waschautomaten und Wäschetrocknern, als Zweischeibentrieb mit großem Übersetzungsverhältnis.

Der in Fig. 1 dargestellte Keilrippenriemen 10 weist einen Keilriemenrücken 11 und einen Rippenteil 12 auf, die beide überwiegend aus einem Elastomer, vorzugsweise aus Gummi, aufgebaut sind und verschiedene, insbesondere faden- oder faserförmige Verstärkungseinlagen enthalten können und zwischen denen in üblicher Weise ein Zugstrang 13 angeordnet ist, der im allgemeinen im Bereich der neutralen Faser 13a verläuft. Der Rippenteil 12 besteht aus mehreren zueinander parallelen, in der Längsrichtung des Keilrippenriemens verlaufenden Profilrippen 14, die zwischen sich Profilrillen 15 bilden. Der Abstand zwischen den Mitten zweier benachbarter Profilrippen 14 wird als Rippenteilung 18 bezeichnet. Bei dem gezeigten Ausführungsbeispiel sind die Profilrippen 14 mit trapezförmigem, die Profilrillen 15 mit V-förmigem Querschnitt ausgebildet. Die Profilrillen 15 weisen Profilwinkel 19 auf, die im Prinzip frei wählbar sind. Axial außen ist das Rippenteil 12 bzw. die beiden jeweils axial außen liegenden Profilrippen 14a durch freie Profilflanken 20 begrenzt.

Bei Krümmung eines solchen Keilrippenriemens 10 um eine mit einer entsprechenden Rillenzahl versehene Riemenscheibe 22 erfährt der Keilriemenrücken 11 eine Streckung, während die Profilrippen 14 gestaucht werden. Dadurch entstehen, wie die Fig. 2 zeigt, zwischen zwei jeweils benachbarten Profilrippen 14 gegeneinander gerichtete Stützkräfte 21. Bei den axial außen liegenden Profilrippen 14a wirkt an den Profilflanken 20 lediglich eine axial nach außen gerichtete Stützkraft 21a, während eine entsprechende Gegenkraft fehlt, so daß die neutrale Faser 13a die Tendenz erhält, sich radial nach außen zu wölben. Die beim Krümmen des Keilrippenriemens entstehende Verkleinerung der Profilwinkel 19 und 19a ist dabei an den axial innen liegenden Rippen 14 geringer als an den axial außen liegenden Rippen 14a.

Diesem Phänomen wird durch eine erfindungsgemäße Keilrippenriemenscheibe 22 Rechnung getragen, wie sie in der Fig. 3 dargestellt ist. Bei dieser Keilrippenriemenscheibe 22 sind eine Vielzahl von Scheibenrippen 23 in axialer Richtung nebeneinander angeordnet. Zwischen den Scheibenrippen 23 sind Scheibenrillen 24 vorgesehen, die in ihren Abmessungen mit den Profilrippen 14 eines Keilrippenriemens 10 nach der Fig. 1 korrespondieren.

Die Scheibenrillen 24 weisen Rillenwinkel 25, 25a auf, die mit den Profilwinkeln 19 der Profilrippen 14 korrespondieren sollen. Die axial innen liegenden Scheibenrillen 24 weisen untereinander jeweils einen gleichen Mittenabstand 26 von Scheibenrille zu Scheibenrille auf. Axial nach außen ist die Riemenscheibe 22 durch jeweils einen Scheibenrand 27 begrenzt. Die axial äußeren Scheibenrillen 24a weisen erfindungsgemäß größere Rillenwinkel 25a als die axial innen liegenden Scheibenrillen 24 auf. Ebenso sind die Mittenabstände 26a der axial außen liegenden Scheibenrillen 24a zu der nächst benachbarten axial innen liegenden Scheibenrille 24 größer als die Mittenabstände 26 zwischen den axial innen liegenden Scheibenrillen 24.

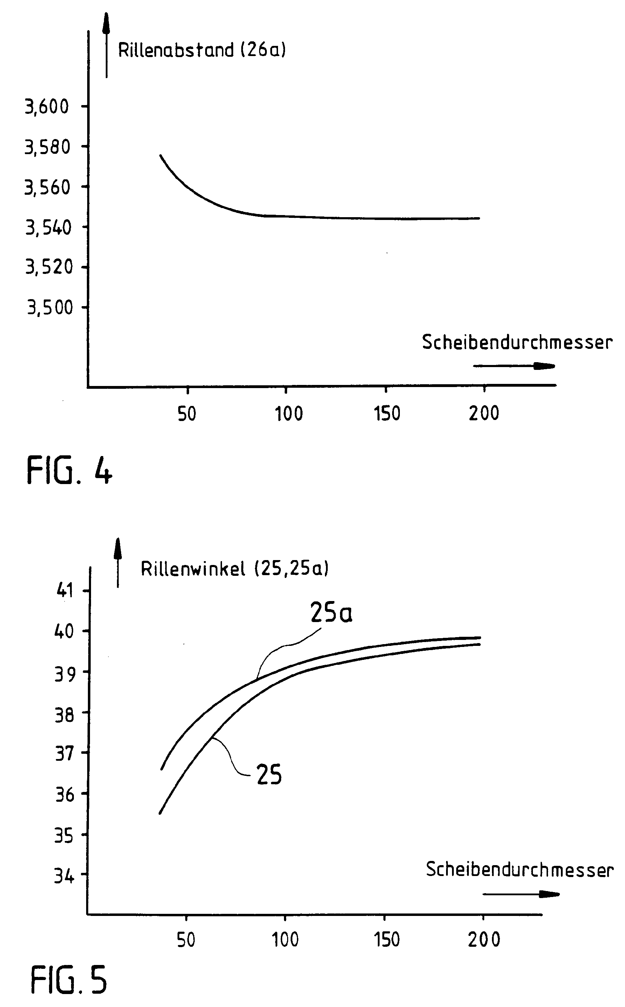

In Fig. 4 ist der Rillenabstand als Funktion des Scheibendurchmessers für ein Ausführungsbeispiel eines Keilrippenriemens dargestellt. Dabei zeigt sich, daß der Rillenabstand 26 um so größer sein soll, je kleiner der Scheibendurchmesser ist.

In Fig. 5 sind für ein Ausführungsbeispiel eines erfindungsgemäßen Keilriementriebes die äußeren Rillenwinkel 25a und die inneren Rillenwinkel 25 als Funktion des Scheibendurchmessers dargestellt. Dabei zeigt sich, daß die äußeren Rillenwinkel 25a bei gleichem Scheibendurchmesser größer als die inneren Rillenwinkel 25 sein sollen. Ferner sind die axial äußeren Rillenwinkel 25a bei kleineren Durchmessern der Keilrippenriemenscheiben 22 größer zu wählen als bei größeren Durchmessern. Auch ist der Unterschied zwischen den axial inneren Rillenwinkeln 25 und den axial äußeren Rillenwinkeln 25a bei kleineren Durchmessern größer als bei größeren Durchmessern.

## Patentansprüche

1. Keilriementrieb, bestehend aus einem Keilrippenriemen mit einer Vielzahl im Querschnitt annähernd gleicher, etwa V-förmiger Profilrippen (14), die über einen gemeinsamen Keilriemenrücken (11) miteinander verbunden sind und zwischen sich etwa V-förmige Profilrillen (15) vorbestimmter Profilwinkel aufweisen, und Riemenscheiben, die eine entsprechende Anzahl von Scheibenrillen (24a, 24) vorbestimmter Rillenwinkel (25a, 25) aufweisen, wobei der Querschnitt der Scheibenrillen in Abhängigkeit vom Scheibendurchmesser dem Querschnitt der in ihnen ablaufenden Profilrippen angepaßt ist, **dadurch gekennzeichnet,** daß die Rillenwinkel (25a) der beiden axial äußeren Scheibenrillen (24a) größer als die Rillenwinkel (25) der axial innen benachbarten Scheibenrillen (24) sind.

2. Keilriementrieb nach Anspruch 1, dadurch gekennzeichnet, daß die Rillenwinkel (25a) der axial äußeren Scheibenrillen (24a) um so größer gegenüber den axial inneren Rillenwinkeln (25) der inneren Scheibenrillen (24a) sind, je kleiner der Durchmesser der Riemenscheibe (22) ist.

3. Keilriementrieb nach einem der Ansprüche 1 bis 2, dadurch gekennzeichnet, daß die Rillenwinkel (25) der axial inneren Scheibenrillen (24) kleiner als die Profilwinkel (19) der ihnen zugeordneten Profilrippen (14) des Keilrippenriemens (10) im gestreckten, entlasteten Zustand sind.

4. Keilriementrieb nach einem der Ansprüche 1 bis 3, dadurch gekennzeichnet, daß die Rillenwinkel (25a) der axial äußeren Scheibenrillen (24a) kleiner als die Profilwinkel (19a) der ihnen zugeordneten äußeren Profilrippen (14a) des Keilrippenriemens (10) im gestreckt entlasteten Zustand sind.

5. Keilriementrieb nach einem der Ansprüche 1 bis 4, dadurch gekennzeichnet, daß die inneren Rillenwinkel (25) untereinander gleich groß sind.

## Claims

1. V-belt drive, comprising a ribbed V-belt having a plurality of substantially V-shaped profile ribs (14), which have approximately identical cross-sections and are interconnected via the intermediary of a common V-belt ridge (11), said ribs having therebetween substantially V-shaped profile grooves (15) of predetermined profile angles, and belt pulleys which have a corresponding number of pulley grooves (24a, 24) of predetermined groove angles (25a, 25), the cross-section of the pulley grooves being adapted to the cross-section of the profile ribs extending therein in dependence on the pulley diameter, characterised in that the groove angles (25a) of the two axially external pulley grooves (24a) are greater than the groove angles (25) of the axially internally adjacent pulley grooves (24).

2. V-belt drive according to claim 1, characterised in that the greater the groove angles (25a) of the axially external pulley grooves (24) are, when compared with the axially internal groove angles (25) of the internal pulley grooves (24a), the smaller the diameter of the belt pulley (22) is.

3. V-belt drive according to one of claims 1 to 2, characterised in that the groove angles (25) of the axially internal pulley grooves (24) are smaller than the profile angles (19) of the profile ribs (14) of the ribbed V-belt (10), which are associated therewith, in the stretched, relieved state.

4. V-belt drive according to one of claims 1 to 3, characterised in that the groove angles (25a) of the axially external pulley grooves (24a) are smaller than the profile angles (19a) of the external profile ribs (14a) of the ribbed V-belt (10), which are associated therewith, in the stretched, relieved state.

5. V-belt drive according to one of claims 1 to 4, characterised in that the internal groove angles (25) are identical to one another in respect of size.

## Revendications

1. Entraînement à courroie en V, se composant d'une courroie à nervures en V comportant un grand nombre de nervures profilées (14) à peu près en forme de V, de section approximativement identique, qui sont reliées entre elles par l'intermédiaire d'une partie dorsale commune (11) de la courroie et qui comportent entre elles des rainures profilées (15) à peu près en forme de V et ayant un angle de profil prédéterminé, ainsi que de poulies qui comportent un nombre correspondant de rainures de poulie (24a, 24) d'un angle prédéterminé (25a, 25), la section des rainures de poulie étant adaptée, en fonction du diamètre de poulie, à la section des nervures profilées passant dans les rainures, caractérisé en ce que les angles (25a) des deux rainures de poulie (24a) axialement extérieures sont plus grands que les angles (25) des rainures de poulie (24) adjacentes et situées axialement à l'intérieur.

2. Entraînement à courroie en V selon la revendication 1, caractérisé en ce que les angles (25a) des rainures de poulie (24a) axialement extérieures sont d'autant plus grands, par rapport aux angles (25) des rainures de poulie (24a) axialement intérieures, que le diamètre de la poulie (22) est plus petit.

3. Entraînement à courroie en V selon une des revendications 1 et 2, caractérisé en ce que les angles (25) des rainures de poulie (24) axialement intérieures sont plus petits que les angles de profil (19) des nervures profilées (14), respectivement associées, de la courroie (10) se trouvant dans un état allongé et déchargé.

4. Entraînement à courroie en V selon une des revendications 1 à 3, caractérisé en ce que les angles (25a) des rainures de poulie (24a) axialement extérieures sont plus petits que les angles de profil (19a) des nervures profilées extérieures (14a), respectivement associées, de la courroie (10) se trouvant dans un état allongé et déchargé.

5. Entraînement à courroie en V selon une des revendications 1 à 4, caractérisé en ce que les angles intérieurs de rainures (25) ont mutuellement les mêmes grandeurs.
